# EUROPÄISCHE PATENTANMELDUNG

(11) **EP 2 921 424 A1**
(43) Veröffentlichungstag der Anmeldung: **23.09.2015**
(21) Anmeldenummer: 14160762.2
(22) Anmeldetag: 19.03.2014
(51) Int. Cl.: B65D 75/32, B32B 15/085, B32B 15/088, B32B 15/09, B32B 27/32, B32B 27/34, B32B 27/36, B32B 1/06, B32B 3/08, B32B 3/28, B32B 3/30

(54) **Folie für Blisterverpackungen**

(71) Anmelder: Constantia Flexibles International GmbH, 1200 Wien (AT)
(72) Erfinder: Zuser, Wilhelm, 3202 Hofstetten Grünau (AT); Nekula, Lambert, 3202 Hofstetten Grünau (AT); Gerstl, Klaus, 3202 Hofstetten Grünau (AT)
(74) Vertreter: Patentanwälte Barger, Piso & Partner

(57) **Zusammenfassung**

Die Erfindung betrifft eine Folie für Blisterverpackungen. Um beim Tiefziehen bessere Resultate zu erzielen ist vorgesehen, dass sie vor dem Tiefziehen beim Herstellen der Blisterverpackung einem Prägevorgang unterzogen wird, bei dem die Folie in kleine, unregelmäßige Falten gelegt wird.

## Beschreibung

Die Erfindung betrifft ein Folienmaterial für die Herstellung von Blisterverpackungen und dieses Folienmaterial enthaltende Blisterverpackungen entsprechend den Oberbegriffen der unabhängigen Patentansprüche.

Es gibt prinzipiell zwei unterschiedliche Arten von Blisterverpackungen: Bei der ersten, älteren Art, auch Streifenverpackung genannt, werden zwei, zumeist gleichartige oder gleiche Folien entlang einer umlaufenden Linie, die natürlich eine endliche Breite aufweist, miteinander versiegelt, so dass im abgeschlossenen, inneren Bereich durch das darin befindliche Gut ein Hohlraum entsteht. Durch die Bildung makroskopischer Falten in Kombination mit einer gewissen plastischen Dehnung wird beim Befüllen und Siegeln aus dem ebenen Material mit dem enthaltenen Gut durch eine Art Tiefziehen oder Streckziehen, ohne Verwendung einer Form ein polsterfömiges Gebilde. Bei der zweiten, jüngeren Art von Blisterverpackungen, auch Formpackung genannt, werden zwei Folien mit stark unterschiedlichen mechanischen Eigenschaften verwendet: Eine erste Folie wird durch Tiefziehen, auch Streckziehen genannt, in einer Form so verformt, dass sie zumindest einen, zumeist aber eine Vielzahl von Näpfen aufweist, eine zweite Folie wird dann als Deckfolie über die Näpfe gelegt und im Wesentlichen großflächig mit der Napffolie versiegelt, so dass eine Vielzahl von geometrisch definierten Hohlräumen entsteht, in denen das Gut jeweils Stück für Stück vorgesehen ist.

Die Folien weisen in den meisten Fällen eine Schicht aus Aluminium auf, da dieses wegen seiner mechanischen Eigenschaften, vor allem wegen seiner Barriereeigenschaften hervorragend dafür geeignet ist. Obgleich eine Vielzahl von Waren auf eine solche Weise verpackt werden, ist die häufigste Anwendung doch auf dem Gebiete der Pharmazie, auf diesem Gebiet werden die höchsten Anforderungen sowohl an die Reinheit als auch an die Barriereeigenschaften und natürlich auch an das optische Erscheinungsbild der fertigen Verpackung gestellt.

Es ist nun bei beiden Arten der Blisterverpackung so, dass die Kosten der Verpackung zu einem merklichen Teil von den reinen Materialkosten bestimmt werden, und dass hier wiederum aus den verschiedensten Gründen, darunter Gründe betreffend den Umweltschutz und merkantile Gründe, ein starker Druck besteht, mit der Menge des verwendeten Aluminiums möglichst zu sparen. Bei der Streifenverpackung ist nun die Fläche der Verpackung (und damit die Menge des Verpackungsmaterials) wesentlich größer als der entsprechende Querschnitt des Gutes, mit anderen Worten, es wird viel Verpackungsmaterial benötigt.

Bei der Formpackung stößt man auf die materialbedingten Grenzen beim Tiefziehen bzw. Streckziehen, da in den vom Tiefziehen am meisten beanspruchen Gebieten der Folie, somit im Bereich der schrägen Wände der Näpfe und in den Bereichen der Umlenkungen, sowohl im Bereich der Napfränder, als auch zum Napfboden hin, die größte Gefahr für das Auftreten von Mikroporen, mikroskopisch kleinen Rissen und Ähnlichem (allgemein Schwachstellen genannt) besteht, wodurch die Barriereeigenschaften der Aluminiumfolie kompromittiert oder gar hinfällig werden.

Dazu kommt, dass die erste Art von Blisterverpackung, die Streifenverpackungen, wegen der Falten und der optisch sichtbaren Dehnungen von den Verpackern nicht so gerne verwendet wird, wie die mit den tiefgezogenen Näpfen, dass diese aber aufwändigeres Material benötigen und deshalb und wegen des Tiefziehwerkzeuges entsprechend teurer sind.

Es besteht daher ein großer Bedarf an einer Folie, die es erlaubt, gegenüber dem Stand der Technik mit der Grammatur (dies ist, neben direkten Angaben in µm eine übliche Angabe für die Dicke von Folien, angegeben in g/m²) insbesondere an Aluminium, hinunter zu gehen, ohne die Gefahr der Bildung von Schwachstellen zu erhöhen.

Es ist das Ziel der Erfindung, eine solche Folie anzugeben.

Erfindungsgemäß werden diese Ziele durch die im kennzeichnenden Teil des Anspruches 1 angegebenen Merkmale erreicht; mit anderen Worten es wird eine Folie verwendet, die vor dem Tiefziehen bzw. Befüllen einem Prägevorgang unterworfen wird. Dieser Prägevorgang wird so ausgeführt, dass er die Folie fältelt, in kleine Falten legt, wobei ihre Dicke reduziert wird. Bevorzugt bleibt aber durch das Einbringen der kleinen Falten ihre Grammatur im Wesentlichen erhalten. Dabei erfolgt das Fälteln nicht in parallele Falten, sondern auf die beim Prägen übliche, eher stöchastische Weise. Bei der Verwendung einer solchen Folie beim Tiefziehen tritt überraschenderweise eine deutlich reduzierte Reibung an den Formen auf, was den unerwarteten Effekt hat, dass man Werkzeugoberflächen verwenden kann, die dauerhafter und ökonomischer sind als die derzeit verwendeten Teflonoberflächen. So kann insbesondere Stahl oder Polyoxymethylen (POM) verwendet werden.

Weiters wird durch die reduzierte Reibung und durch die Fältelung der Folie in den beim Tiefziehen besonders stark beanspruchten Gebieten im Zuge des Tiefziehens sowohl eine Glättung der Fältelung erreicht, als auch eine Verbesserung des Nachfließens von Material aus den umliegenden Bereichen, wodurch auch bei reduzierter Grammatur und damit reduzierter Dicke der Folie (betrachtet ohne bzw. vor der Prägung) die Gefahr des Auftretens von Schwachstellen, wie Mikroporen oder Mikrorissen, deutlich reduziert wird.

Durch die Erfindung wird es auch möglich, Streifenverpackungen für Inhalte (Tabletten) einzusetzen, die bisher nur in den teureren Formpackungen verpackt werden konnten.

Die Erfindung wird im Folgenden anhand der Zeichnung näher erläutert. Dabei zeigt bzw. zeigen
die Fig. 1 eine Streifenverpackung gemäß dem Stand der Technik in Draufsicht und im Schnitt,

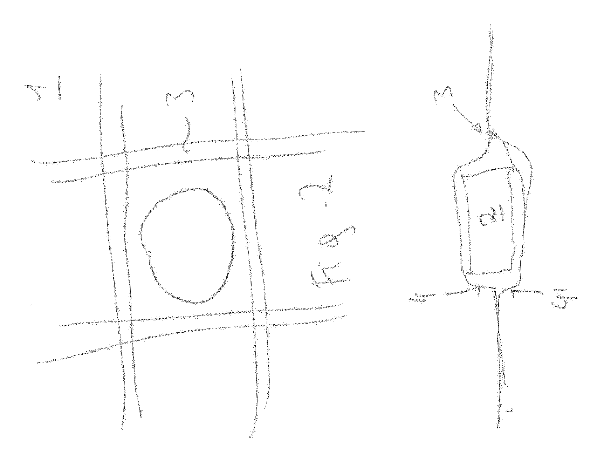

die Fig. 2 analog zur Fig. 1 eine erfindungsgemäße Streifenverpackung,
die Fig. 3 eine Formpackung in Draufsicht und im Schnitt,
die Fig. 4 das Detail IV der Fig. 3,
die Figs. 5 bis 9 Beispiele für erfindungsgemäß geprägte Folien, und
die Figs. 10 und 11 Probleme bei Streifenverpackungen gemäß dem Stand der Technik.

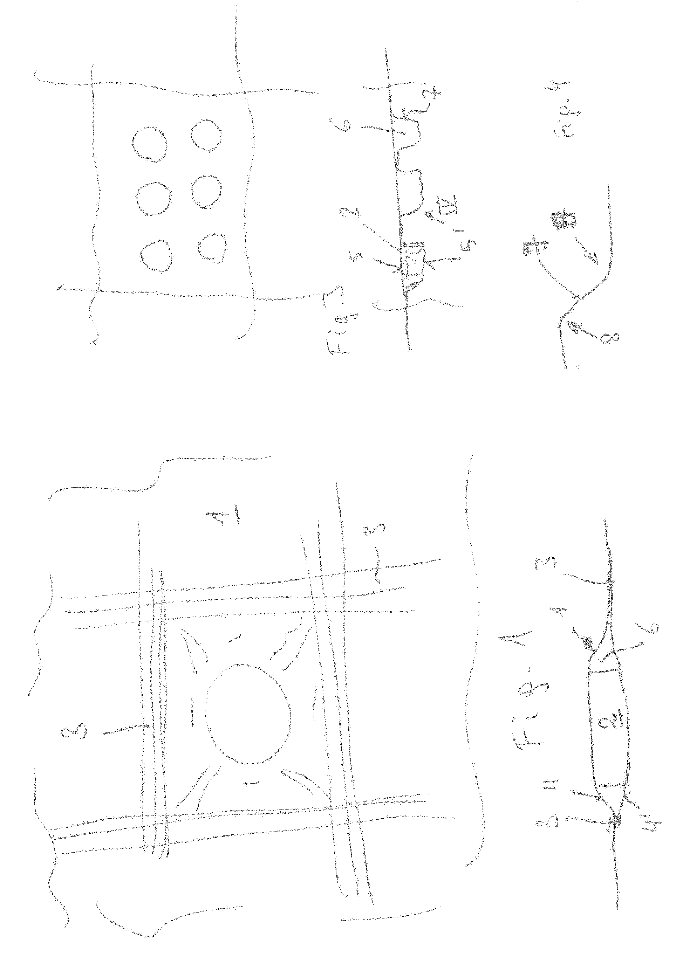

Die Fig. 1 zeigt, rein schematisch, einen Ausschnitt aus einer Streifenverpackung 1 für eine scheibenförmige Tablette 2. Siegelnähte 3, mit denen die beiden Folien 4, 4' dicht miteinander verschweißt sind, umgeben die Tablette 2 an allen Seiten und schaffen eine dichte Verpackung, einen Blister 6. Wie insbesondere die Draufsicht zeigt, benötigt man eine Folienfläche, die weit größer ist als die Grundfläche der Tablette. Wenn man versucht, die Höhe der Tablette zu vergrößern, stößt man auf Probleme beim Schließen der Verpackung und diese wird zumindest unansehnlich, im Randgebiet der Tablette, wo die mechanische Beanspruchung am Größten ist, kommt es auch zu Festigkeitsproblemen. Die Größe der gesamten Verpackung macht auch deren Handhabung für den Benutzer - Patienten - unangenehm.

Diese Probleme führten zur Entwicklung der Formpackungen, wie sie in Fig. 3 dargestellt ist: Eine Deckfolie 5 und eine Napffolie 5'sind passend mittels Siegelnähten - zumeist die gesamte Kontaktfläche erfassend - verbunden und bilden eine Mehrzahl von Blistern 6 für die einzelnen Tabletten 2. Durch die steil ausgebildeten, zumeist konischen Seitenwände 7 der einzelnen Blister 6 wird die Verpackung insgesamt kleiner, dafür sind die gekrümmten Bereiche 8 und die stark gedehnte Seitenwand 7 Stellen, an denen die Napffolie 5' beim Tiefziehen extrem stark beansprucht wird.

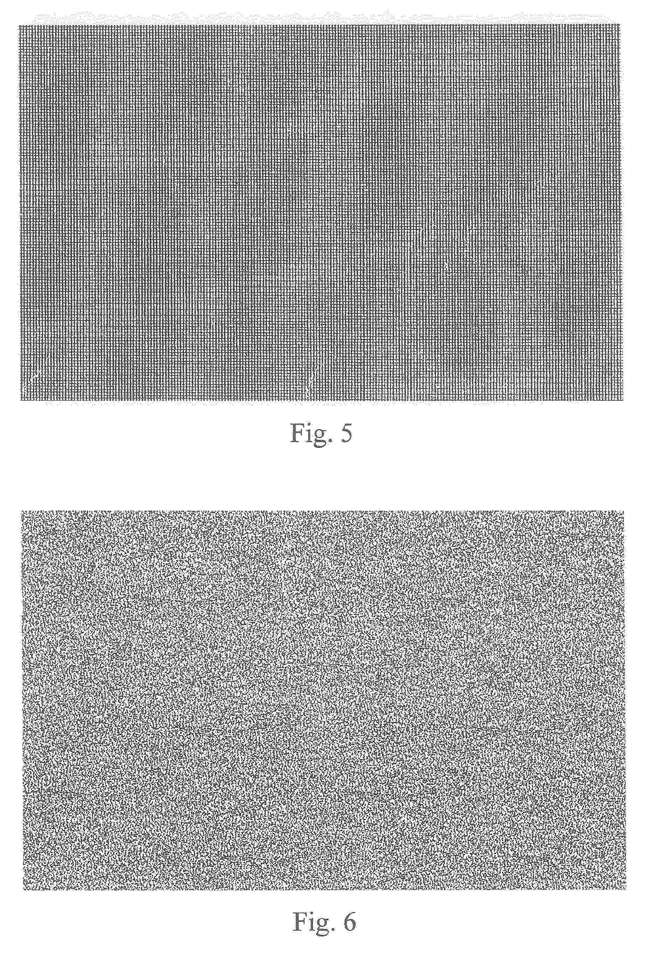

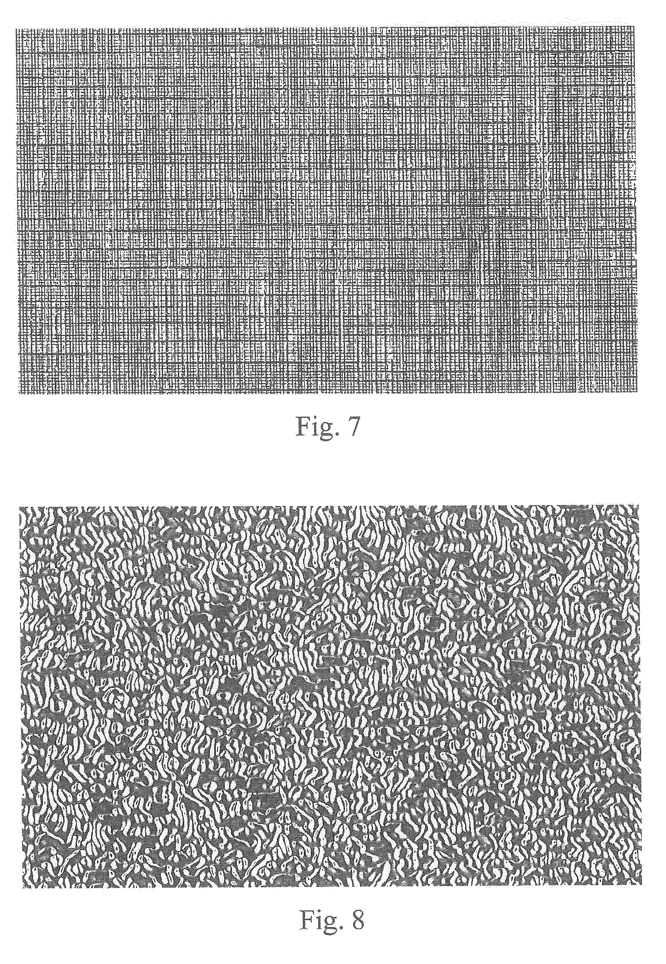

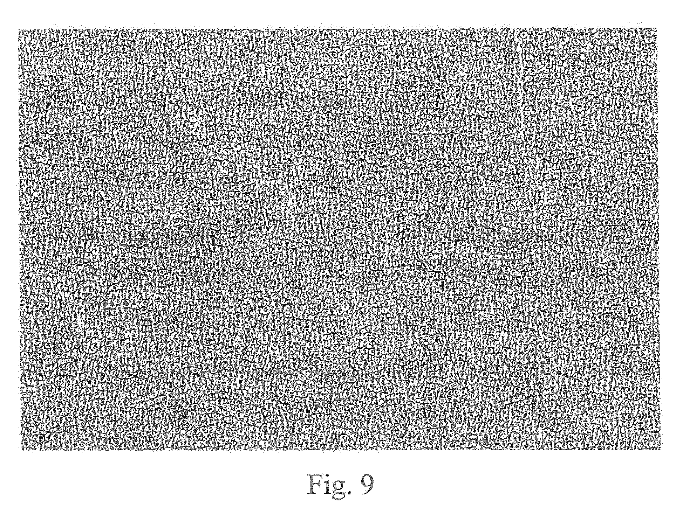

Diese beiden Problemkomplexe werden durch die Verwendung einer erfindungsgemäß geprägten Folie gelöst, Beispiele für das Aussehen einer solchen Prägung sind in den Fig. 5 bis 9 rein exemplarisch dargestellt. Es sind sowohl eher linear - gekreuzte Muster wie in den Figs. 5 oder 7, oder Wurmmuster wie in Fig. 8, oder stark stöchastisch geprägte Muster wie in den Fig. 6 und 9 verwendbar.

Das erfindungsgemäße Fälteln, im Folgenden Prägen genannt, erreicht man dadurch, dass das Ausgangsmaterial durch ein Paar Prägewalzen gezogen wird. Dabei gibt es die Möglichkeit, eine der beiden Walzen mit einer entsprechend reliefierten Oberfläche zu versehen und die Gegenwalze, wie es bekannt ist, passend mit Papier oder ähnlichem deformierbaren Material zu belegen. Bevorzugt wird allerdings die Verwendung zweier aneinander angepasster Stahlwalzen mit komplementär geriffelten Oberflächen, die über eine Verzahnung oder dgl. winkelgetreu abrollen und so die Folie auf beiden Seiten durch Formschluss prägen.

Als ideal hat sich herausgestellt wenn die so genannte Prägetiefe, das ist der Abstand einer auf der Oberseite und einer auf der Unterseite der geprägten Folie auf deren jeweiligen "Gipfeln" liegenden Tangentialebene, zumindest dem Doppelten, bevorzugt zumindest dem Dreifachen der Dicke der ungeprägten Folie entspricht. Auch das Fünffache dieser Dicke ist denkbar, doch muss dabei stets im Auge behalten werden, dass in den Gebieten der Folie, in denen keine Deformation beim Tiefziehen auftritt, der gesamte Prägevorgang nur eine Art Nullsummenspiel ist, und dass bei zu intensiver Prägung unter Umständen die Siegeleigenschaften gegen die ebene Deckfolie bzw. die Gegenfolie leiden.

Wie schon oben erwähnt, ist eine Verdünnung der ursprünglichen Folie im Zuge des Prägevorgangs auf ein solchen Maß, dass das Flächengewicht (Grammatur) erhalten bleibt, eine gute Daumenregel für die Herstellung einer gut zu verwendenden Folie, doch ist es als Merkmal für den Schutzbereich der Erfindung insoferne schlecht geeignet, als die Ausgangsdicke der möglicherweise patentverletzenden Folie kaum bekannt ist.

Eine derartige erfindungsgemäße Folie kann bei beiden Arten von Blisterverpackungen eingesetzt werden: Bei der mit tiefgezogenen Näpfen als Napffolie, die Deckfolie auf diese Art auszugestalten bringt keinerlei Vorteile. Bei der "Polsterform" sind vorteilhafterweise beide Folie derartig ausgebildet, doch bringt es schon Vorteile, wenn nur eine der Folien erfindungsgemäß geprägt worden ist, soferne diese Folie beim Siegelvorgang entsprechend gehalten wird um eine durch die aufgebrachten Kräfte erfolgende Rückbildung der Fältelung - Glättung - an den beanspruchten Stellen und Flächen zu erlauben.

Es wird somit möglich, einerseits bei schon bisher hergestellten Blisterverpackungen an Material zu sparen, andererseits können mit dem bisher verwendeten Material bei erfindungsgemäßer Aufbereitung deutlich kritischere Blister hergestellt werden, natürlich ist es auch möglich, eine teilweise Reduzierung des Materials mit einer geringeren Vergrößerung (insbesondere der Tiefe) der Blister zu kombinieren. Allgemein gilt: Beim Prägen wird die Dicke der Folie deutlich reduziert und ihre Fläche entsprechend vergrößert. Durch das Fälteln bzw. Zerknüllen wird diese verdünnte Folie aber in ihrer "makroskopischen" Fläche nicht vergrößert, durch die entstandenen Kämme, Täler, Zacken tritt haptisch sogar das Gefühl einer deutlich dickeren Folie auf!

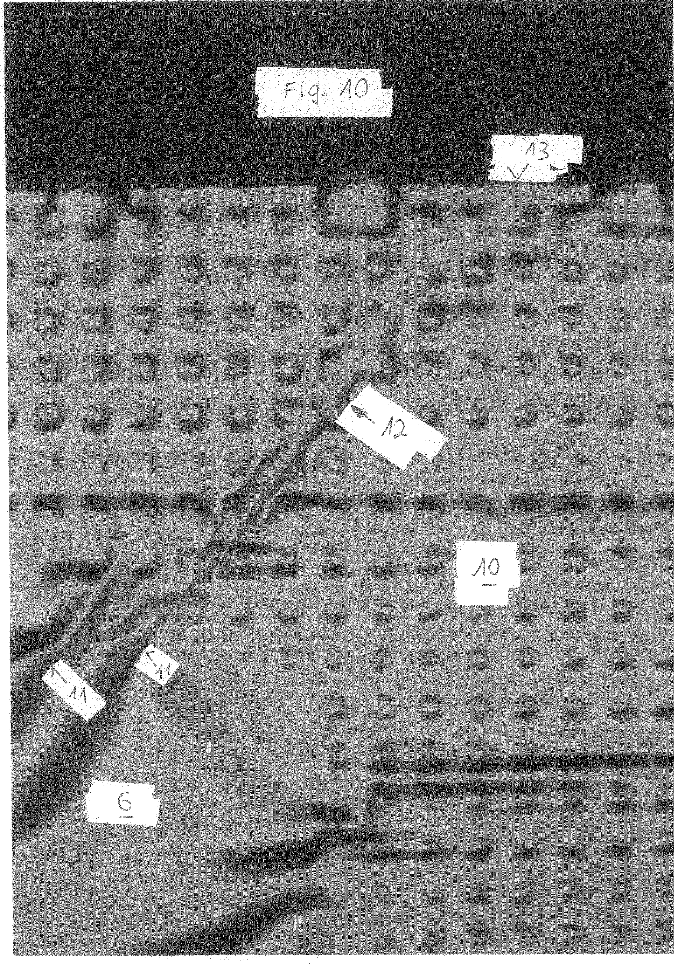

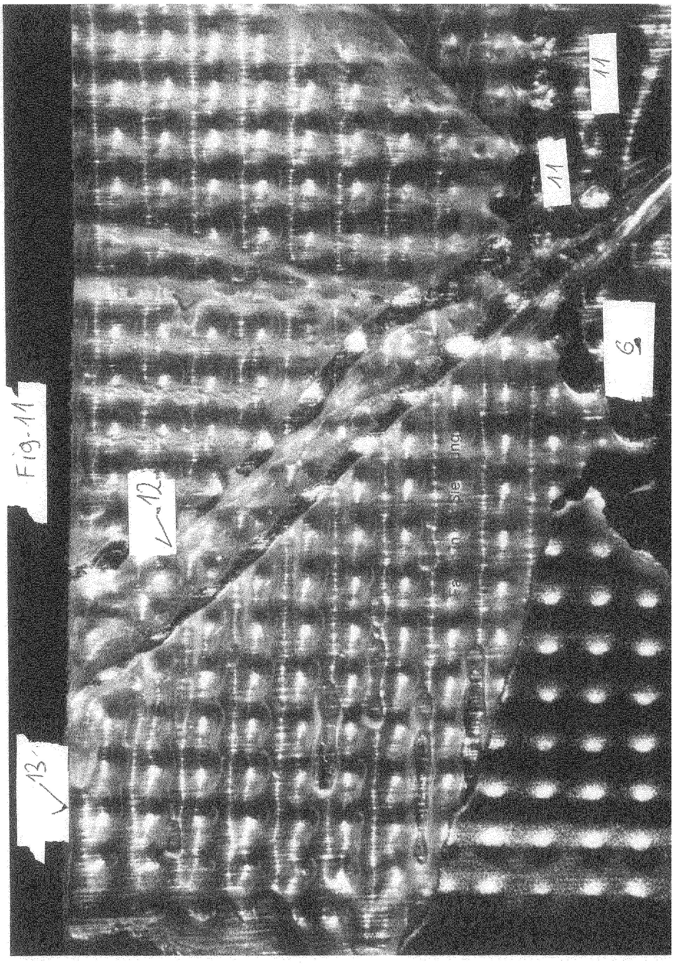

Als Beispiel für die Probleme, die bei Streifenverpackungen gemäß dem Stand der Technik auftreten, sind die Figs. 10 und 11 angehängt: Man erkannt den Randbereich eines Blisters 6 an der glatten Oberfläche und die Siegelfläche 10 an den markanten Vertiefungen, die durch das Siegelwerkzeug hervorgerufen werden. Durch die makroskopischen Falten 11 beim Umschließen des Gutes kommt es zur Ausbildung einer durchgehenden Falte 12, die bis in den Randbereich 13 der Streifenverpackung reicht und die Dichtheit der Siegelung kompromittiert. Durch die Verwendung erfindungsgemäßer Folie werden diese Probleme vermieden.

Als besonders geeignete Folien sind beispielhaft die Folgenden genannt:

### Mehrschichtige Folien:

Für die Napffolie von Formpackungen üblich und am Markt überwiegend eingesetzt sind dreischichtige Folien mit einem Aufbau von:
25µm oPA / 47µm Alu / 60µm PVC,
wobei oPA für biaxial gerecktes Polyamid, Alu für (zumeist weiches) Aluminium und PVC für Polyvinylchlorid steht. Beim Tiefziehen von Näpfen mit einer größerer Höhe (oder Tiefe, je nach Betrachtungsweise) als etwa 1/3 der Breite bzw. des Durchmessers des Napfes, gemessen an der Siegelebene, treten die oben genannten Probleme auf. Diese werden nach dem Stand der Technik dadurch umgangen, dass eine Folie mit dem folgenden Aufbau verwendet wird:
60µmPVC / 15µm oPA / 60µm Alu / 15µm oPA / 60µm PVC

Die Gesamtdicke beträgt somit 225µm (!!!), der symmetrische Aufbau ist speziell für die Verwerfungsfreiheit günstig, auch bei der Verarbeitung gemäß dem Stand der Technik (somit ohne Prägen) bleibt die Folie ausreichend eben, doch sind die Kosten enorm. Durch die erfindungsgemäße Vorbehandlung der zuerst genannten Folie wird es möglich, sie auch bei Näpfen, deren Tiefe bis zu 40 %, unter Umständen bis 45 %, der Breite bzw. des Durchmessers des Napfes, gemessen an der Siegelebene, beträgt, einzusetzen und so an Material und dessen teuerer Herstellung zu sparen.

### Zweischichtige Folien:

25-40µmAlu mit 20-50µm Polyethylen, gesamt 45µm bis 90µm, bevorzugt verwendbar sind 30µm Alu (weich) mit 25-35µm Polyethylen, somit gesamt 55-65µm. Diese Folien, gedacht für Streifenverpackungen, ermöglichen es, ein Verfahren anzuwenden, das bisher, speziell auf dem Gebiet der Pharmazie, nicht angewandt wurde: Es werden zumindest eine, bevorzugt aber beide Folien vor dem Einlegen des Gutes einer Vakuumumformung unterworfen. Bei diesem, an sich bekannten, Verfahren wird die Folie im erwärmten Zustand durch Anlegen eines Vakuums in eine Form gezogen, deren Form sie nach dem Erkalten behält.

Damit wird es möglich, die Form besser als bisher an das Gut (die Tablette) anzupassen, wodurch schon an sich Material gespart wird. Darüberhinaus wird die Verpackung an sich kleiner, da in der Folge die Siegelnähte näher an das Gut gelegt werden können.

### Dreischichtige Folien mit Kunststoff:

Aufgebaut wie die oben genannten zweischichtigen Folien, aber zusätzlich mit entweder Polyester 10-23µm oder oPA 15-25µm auf der freien Aluminiumseite. Insbesondere für schwere Aufgaben geeignet, die mit der Technologie gemäß dem Stand der Technik nicht oder nicht ökonomisch zu lösen sind. Auch hier ist die Möglichkeit des Vakuumverformens gegeben und sinnvoll einsetzbar.

In einer Variante kann vorgesehen sein, dass die Aluminiumschicht, auf der der Siegelschicht abgewandten Seite, mit einer Schicht von boPP (biaxial gestreckte Polypropylenfolie) oder PETP (Polyethylenterephthalat) versehen ist. Diese Zusammensetzung ist insbesondere in feuchter Umgebung (Tropen, Meer) vorteilhaft, da weniger hygroskopisch als oPA.

### Dreischichtige Folien mit Papier:

Heute vielfach verwendete Folien für Streifenverpackungen haben folgenden Aufbau: Papier 40-50g/m² / 7-25µm Alu / 20-50µm Polyethylen, gesamt etwa 65-125µm. Durch das Papier auf der Außenseite wird eine gute Druckbasis erreicht. Wegen des dem Papier intrinsischen Widerstandes gegen eine Prägung für die erfindungsgemäßen Zwecke nur bedingt brauchbar, kann aber eine erfindungsgemäße Prägung doch einen zwar geringen, in vielen Fällen aber ausreichenden Effekt beisteuern, um teure Lösungen zu vermeiden.

Es wird durch die erfindungsgemäßen Folien überraschenderweise das Planliegen merklich verbessert, was insbesondere die Handhabung beim Befüller deutlich erleichtert; es wird das Verhalten des Materials beim Tiefziehen sehr deutlich verbessert, was die Verwendbarkeit für als schwierig anzusehende Formen und Abmessungen deutlich erhöht und es wird die Steifigkeit sowohl der Folie per se, was für Streifenverpackungen wesentlich ist, als auch nach dem Tiefziehen, was für Formpackungen bedeutend ist, stark erhöht.

**Bezugszeichenverzeichnis:**

| | | | |
|---|---|---|---|
| 1 | Streifenverpackung | 8 | Gekrümmte Bereiche |
| 2 | Tablette | 9 | Fehlt |
| 3 | Siegelnähte | 10 | Siegelfläche |
| 4 | Folie, 4' Folie | 11 | Makroskopische Falten |
| 5 | Deckfolie, 5' Napffolie | 12 | Durchgehende Falte |
| 6 | Blister | 13 | Randbereich |
| 7 | Seitenwände | | |

## Patentansprüche

1. Folie für Blisterverpackungen, **dadurch gekennzeichnet, dass** sie vor dem Tiefziehen beim Herstellen der Blisterverpackung einem Prägevorgang unterzogen wird, bei dem die Folie in kleine Falten gelegt wird.

2. Folie nach Anspruch 1, **dadurch gekennzeichnet, dass** sie eine Schicht aus Aluminium und eine siegelfähige Schicht aufweist.

3. Folie nach Anspruch 2, **dadurch gekennzeichnet, dass** die Aluminiumschicht auf der der Siegelschicht abgewandten Seite eine Schicht von oPA (biaxial gerecktes Polyamid) aufweist.

4. Folie nach Anspruch 2, **dadurch gekennzeichnet, dass** die Aluminiumschicht auf der der Siegelschicht abgewandten Seite eine Schicht von oPP oder PETP versehen ist.

5. Folie nach einem der Ansprüche 2 bis 4, **dadurch gekennzeichnet, dass** die Aluminiumschicht vor dem Prägen eine Dicke von 25 bis 60µm aufweist.

6. Folie nach Anspruch 2, **dadurch gekennzeichnet, dass** sie weiters eine Papierschicht aufweist und dass die Aluminiumschicht vor dem Prägen eine Dicke von 7-25µm aufweist.

7. Verfahren zur Herstellung einer Folie nach einem der Ansprüche 1 bis 4, **dadurch gekennzeichnet, dass** die Ausgangsfolie durch ein Paar Prägewalzen geführt wird, von denen zumindest eine eine Stahlwalze mit geriffelter Oberfläche ist.

8. Verfahren nach Anspruch 5, **dadurch gekennzeichnet, dass** die Ausgangsfolie durch zwei Stahlwalzen mit komplementär geriffelten Oberflächen und aufeinander abgestimmter Winkellage geführt wird.

9. Blisterverpackung mit zwei miteinander versiegelten Folien, **dadurch gekennzeichnet**, das zumindest eine der Folien eine Folie nach zumindest einem der Ansprüche 1 bis 5 ist.
